# EUROPEAN PATENT APPLICATION

(11) **EP 4 733 649 A1**
(43) Date of publication of application: **29.04.2026**
(21) Application number: 25188208.0
(22) Date of filing: 08.07.2025
(51) Int. Cl.: F16M 11/16, F16B 7/00, F16M 11/32

(54) **SUPPORT LEG ASSEMBLY AND PHOTOGRAPHY SUPPORT STAND**

(30) Priority: 23.10.2024 CN 202422566348 U
(71) Applicant: Shenzhen Leqi Innovation Co., Ltd., Shenzhen, Guangdong 518000 (CN)
(72) Inventor: PAN, Zhiqiang, Shenzhen, 518000 (CN); TANG, Shaorui, Shenzhen, 518000 (CN)
(74) Representative: Valet Patent Services Limited

(57) **Abstract**

A support leg assembly and a photography support stand are provided. The support leg assembly includes a support component, a first locking assembly, and an actuating rod. The support component includes at least a first nested tube and a second nested tube. Th second nested tube is capable of moving along an inner wall of the first nested tube when an external force is applied. The first locking assembly includes a fixing base installed at an end of the second nested tube, a connection sleeve rotatably connected with the fixing base, and a locking member connected with the connection sleeve. A gap is defined between an outer wall of the fixing base and an inner wall of the first nested tube. The locking member is partially inserted into the gap. The actuating rod is inserted into the connection sleeve to drive the connection sleeve to rotate.

## Description

### TECHNICAL FIELD

The present disclosure relates to the technical field of photography equipment, and in particular to a support leg assembly and a photography support stand.

### BACKGROUND

A photography support stand typically includes multiple support leg assemblies working together to provide support. Each support leg assembly includes several nested tubes, the height of which is adjusted via extending or retracting the tubes relative to one another, and once the adjustment is finished, the nested tubes are secured in place using a locking assembly.

In related art, locking member of the support leg assembly includes a fixing base and a rotating shaft. An abutting component is mounted around the outer circumference of the rotating shaft, and additional parts such as elastic components and movable components are also incorporated. However, due to the inclusion of multiple components, such as the fixing base, the rotating shaft, the abutting component, the elastic component, and the movable component, the structure of the locking member is complex and requires high precision for the cooperation between the components, which leads to issues such as wear and loosening during use, resulting in a higher failure rate and significantly affecting the stability and service life of the photography support stand.

### SUMMARY

The main objective of the present disclosure is to provide a support leg assembly, aiming to solve the problem of the high locking failure rate of the support leg assembly.

To achieve the above objective, the present disclosure provides a support leg assembly, including:
a support component, the support component including at least a first nested tube and a second nested tube nested with the first nested tube, and the second nested tube being capable of moving along an inner wall of the first nested tube in a case that an external force is applied;
a first locking assembly, the first locking assembly including a fixing base installed at an end of the second nested tube inserted into the first nested tube, a connection sleeve rotatably connected with the fixing base, and a locking member connected with the connection sleeve; a gap being defined between an outer wall of the fixing base and an inner wall of the first nested tube, and the locking member being partially inserted into the gap; and
an actuating rod inserted into the connection sleeve, the actuating rod being configured to drive the connection sleeve to rotate.

In some embodiments, one end of the connection sleeve is defined with an engagement groove, and an end of the locking member exposing outside the gap is connected in the engagement groove.

In some embodiments, the locking member is sleeve-shaped, an outer wall of the locking member is closely attached to the first nested tube, and an inner wall of the locking member is capable of being closely attached to the outer wall of the fixing base.

In some embodiments, the outer wall of the fixing base is provided with a taper.

In some embodiments, the locking member is defined with a plurality of openings along a circumference of the locking member.

In some embodiments, a middle of the connection sleeve is defined with a through hole, the actuating rod passes through the through hole, the through hole is in a polygonal shape, and a shape and a size of the actuating rod are fitted with the through hole.

In some embodiments, a middle of the fixing base is defined with a threaded hole, and the fixing base is threadedly connected with the connection sleeve.

In some embodiments, the support component comprises multiple first nested tubes and multiple second nested tubes that are sequentially sleeved.

In some embodiments, the support leg assembly further includes: a connection base connected to an end of the first nested tube away from the second nested tube; and a transmission component arranged on the connection base and connected to the actuating rod, the transmission component being configured to transmit a driving force to the actuating rod to allow the actuating rod to rotate.

In some embodiments, the transmission component includes a rack, and the actuating rod is provided with a gear engaged with the rack.

The present disclosure further provides a photography support stand, including: a bearing base; at least one driving assembly; and multiple support leg assemblies each according to any one of the foregoing embodiments. The bearing base is connected with the connection bases of the multiple support leg assemblies, and is configured for installing a photography device; the at least one driving assembly is installed on the bearing base or the connection bases of the multiple support leg assemblies, and is configured to output power to the transmission components of the multiple support leg assemblies; and the at least one driving assembly is a hydraulic pump or a motor.

According to the present disclosure, the support component includes at least a first nested tube and a second nested tube partially inserted into the first nested tube, and the second nested tube is capable of moving relative to the first nested tube in a case that an external force is applied, achieving rapid height adjustment. After a desired height is achieved, the actuating rod drives the locking member, such that the locking member fills the gap between the outer wall of the fixing base and the inner wall of the first nested tube and abuts against the outer wall and the inner wall, thus friction is generated between the first nested tube and the second nested tube, thereby locking the two nested tubes. When unlocking, the actuating rod drives the locking member out of the gap between the outer wall of the fixing base and the inner wall of the first nested tube, thereby releasing the locked state. As such, with just the cooperation of the first locking assembly and the actuating rod, height adjustment and locking in place can be achieved, making the structure simple and efficient.

### BRIEF DESCRIPTION OF THE DRAWINGS

FIG. 1 is a schematic structure diagram of a support leg assembly according to an embodiment of the present disclosure.
FIG. 2 is a side view of a support leg assembly according to an embodiment of the present disclosure.
FIG. 3 is a cross-sectional view along A-A in FIG. 2.
FIG. 4 is an enlarged view of portion B in FIG. 3.
FIG. 5 is an exploded structure diagram of a support leg assembly according to an embodiment of the present disclosure.
FIG. 6 is an enlarged view of portion D in FIG. 5.
FIG. 7 is a schematic structure diagram of a support leg assembly according to an embodiment of the present disclosure.
FIG. 8 is a cross-sectional view along E-E in FIG. 7.
FIG. 9 is a cross-sectional view along F-F in FIG. 7.
FIG. 10 is a schematic structure diagram of a photography support stand according to an embodiment of the present disclosure.

### EXPLANATION OF REFERENCE NUMERAL:

10. support leg assembly; 100, support component; 102, first nested tube; 104, second nested tube; 110, first locking assembly; 112, fixing base; 112a, gap; 112b, threaded hole; 115, connection sleeve; 115a, engagement groove; 115b, through hole; 116, locking member; 116b, opening; 200, actuating rod; 201, gear; 300, connection base; 400, transmission component; 401, rack; 50, photography support stand; 500, bearing base; 600, driving assembly.

The realization, functional features and advantages of the object of the present disclosure will be further described with reference to the drawings in combination with the embodiments.

### DETAILED DESCRIPTION OF THE EMBODIMENTS

The technical solutions in the embodiments of the present disclosure will be described clearly and completely with reference to the accompanying drawings in the embodiments of the present disclosure. Obviously, the described embodiments are only a part of the embodiments of the present disclosure rather than all of them. Based on the embodiments in the present disclosure, all other embodiments obtained by those skilled in the art without creative work shall fall within the scope of protection of the present disclosure.

It should be noted that all directional indications (such as up, down, left, right, front, back) in the embodiments of the present disclosure are merely configured to explain relative position relationships or motion conditions between the components in a specific attitude (as shown in the drawings). The directional indication changes as the specific attitude changes.

It should be noted that when an element is described as "being fixed on" or "being arranged on" another element, the element may be directly arranged on the another element or there may be an intermediate element. When an element is described as "being connected to" another element, the element may be directly connected to the another element or there may be an intermediate element.

Moreover, the terms "first", "second", and the like in the present disclosure are merely used for description and cannot be understood as indicating or implying their relative importance or as implicitly indicating the quantity of the technical features indicated. Thus, the feature defined by "first" or "second" may explicitly or implicitly include at least one such feature. In addition, the technical solutions of various embodiments may be combined with each other, but must be based on that the combined technical solutions can be implemented by those skilled in the art. When the combination of the technical solutions is contradictory or impossible to realize, it shall be considered that such combination does not exist and is not within the scope of protection of the present disclosure.

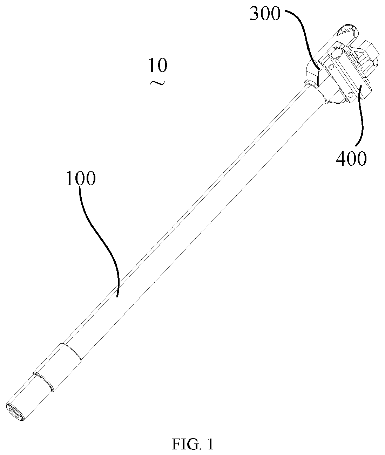

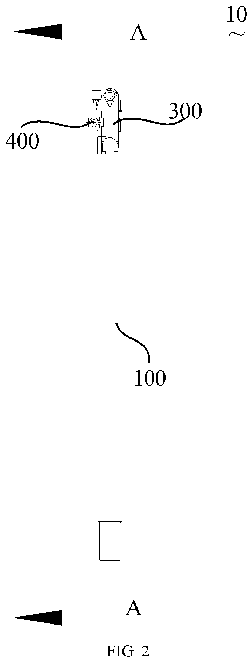

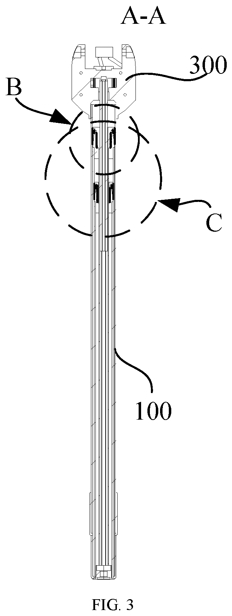

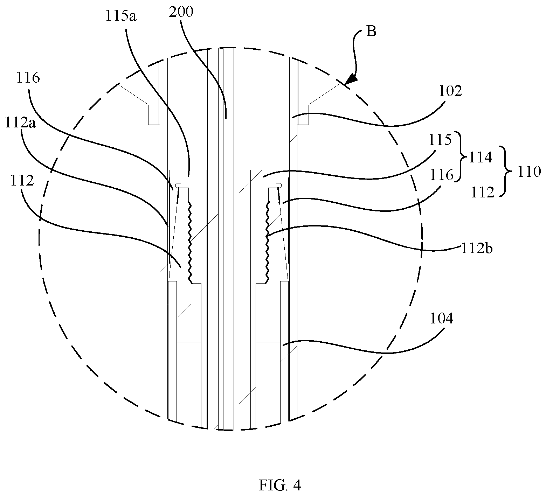

Referring to FIG. 1 to FIG. 4, FIG. 1 is a schematic structure diagram of a support leg assembly according to an embodiment of the present disclosure, FIG. 2 is a side view of a support leg assembly according to an embodiment of the present disclosure, FIG. 3 is a cross-sectional view along A-A in FIG. 2, and FIG. 4 is an enlarged view of portion B in FIG. 2.

In some embodiments, the present disclosure provides a support leg assembly 10 for a photography support stand. The support leg assembly 10 includes a support component 100, a first locking assembly 110, and an actuating rod 200.

The support component 100 includes at least a first nested tube 102 and a second nested tube 104 nested with the first nested tube 102. The second nested tube 104 is capable of moving along the inner wall of the first nested tube 102 in a case that an external force is applied.

The first locking assembly 110 includes a fixing base 112, a connection sleeve 115, and a locking member 116. The fixing base 112 is installed at the end of the second nested tube 104 inserted into the first nested tube 102. There is a gap 112a between the outer wall of the fixing base 112 and the inner wall of the first nested tube 102, and the middle of the fixing base 112 is defined with a threaded hole 112b. The connection sleeve 115 is threaded with the fixing base 112, and the locking member 116 is connected with the connection sleeve 115. The locking member 116 is partially inserted into the gap 112a.

The actuating rod 200 is inserted into the connection sleeve 115, and configured to drive the connection sleeve 115 to rotate.

The support leg assembly 10 provided in the embodiments is an important part of a photography support stand, and can be flexibly applied to a hand-held monopod or a ground tripod. For example, if one support leg assembly 10 is provided, the support leg assembly 10 may be connected with a bearing base of a photography support stand to form a convenient hand-held monopod; if multiple support leg assemblies 10 are provided, the multiple support leg assemblies 10 may be combined to form a stable tripod. These hand-held support stand and the ground support stand both can carry various types of auxiliary devices, such as cameras and lighting devices.

In the embodiments, the support component 100 not only provides a basic support functionality but also incorporates a telescoping feature to accommodate requirements at varying heights. The support component 100 includes at least two nested tubes, namely the first nested tube 102 and the second nested tube 104. Generally, the first nested tube 102 serves as a fixed nested tube connected to a bearing base of a support stand, and the second nested tube 104 is partially inserted into the first nested tube 102. When an external force is applied, the second nested tube 104 can move relative to the first nested tube 102. Such external force may be applied by a user, or may be due to the action of gravity. In some embodiment, in a configuration that a counterweight is provided at the end of the second nested tube 104 away from the first nested tube 102, the effect of gravity can be enhanced.

It should be noted that the inner diameter of the first nested tube 102 is greater than the outer diameter of the second nested tube 104 to ensure smooth telescoping between the two nested tubes. The first nested tube 102 and the second nested tube 104 may be made of metal materials such as aluminum alloy or steel, or other lightweight and high-strength materials like carbon fiber. When the second nested tube 104 is moved to a desired position, it needs to be locked with the first nested tube 102 to prevent position changes. Therefore, the first locking assembly 110 is provided for locking. The first locking assembly 110 includes the fixing base 112 and the locking member 116. The fixing base 112 is mounted at the end of the second nested tube 104 inserted into the first nested tube 102. The locking member 116 is movably connected to the fixing base 112 (e.g., through a screw connection) to realize the locking or unlocking functionality.

When using the support leg assembly 10 for a photography support stand, an external force is first applied to drive the second nested tube 104 to move along the inner wall of the first nested tube 102 to reach a desired height, and then users lock the first nested tube 102 and the second nested tube 104 using the first locking assembly 110.

In the locking process, the actuating rod 200 is inserted into the connection sleeve 115 and is movably connected with the connection sleeve 115. Since the connection sleeve 115 is threaded to the fixing base 112, the rotation of the actuating rod 200 causes the connection sleeve 115 to move close to the fixing base 112, such that the locking member 116 is partially insert into the gap 112a between the outer wall of the fixing base 112 and the inner wall of the first nested tube 102, generating friction to lock the two nested tubes. As such, the support component 100 can be stabilized in a set position, thereby providing a firm support.

When users need to adjust the height or store the support leg assembly 10, the actuating rod 200 drives the connection sleeve 115 away from the fixing base 112 to release the locked state between the first nested tube 102 and the second nested tube 104, allowing the second nested tube 104 to slide freely to a new position for height adjustment or convenient storage. Thus, users can easily adjust the height, thereby significantly improving operational efficiency in situations where frequent height adjustments are needed.

According to technical solution of the embodiments, the support component 100 includes at least a first nested tube 102 and a second nested tube 104 partially inserted into the first nested tube 102, and the second nested tube 104 is capable of moving relative to the first nested tube 102 in a case that an external force is applied, achieving rapid height adjustment. After a desired height is achieved, the actuating rod 200 drives the locking member 116, such that the locking member 116 fills the gap 112a between the outer wall of the fixing base 112 and the inner wall of the first nested tube 102 and abuts against the outer wall and the inner wall, thus friction is generated between the first nested tube and the second nested tube, thereby locking the two nested tubes. When unlocking, the actuating rod 200 drives the locking member 116 out of the gap 112a between the outer wall of the fixing base 112 and the inner wall of the first nested tube 102, thereby releasing the locked state. The cooperation between the first locking assembly 110 and the actuating rod 200 makes the height adjustment and locking simple and convenient, avoiding complicated mechanical structures, and allowing for easy operation and simplified steps.

Referring to FIG. 4, in the embodiments, one end of the connection sleeve 115 is defined with an engagement groove 115a, and the end of the locking member 116 that is not inserted into the gap 112a is connected in the engagement groove 115a.

In the embodiments, the engagement groove 115a ensures that the connection sleeve 115 can stably drive the locking member 116 into the gap 112a, as well as drive the locking member 116 out of the gap 112a. This design effectively prevents potential failures of the locking member 116 during operation, ensuring a smooth and reliable locking and unlocking process. The locking member 116 is sleeve-shaped, with its outer wall tightly fitting against the first nested tube 102 and its inner wall partially inserted into the gap 112a. The inner wall of the locking member 116 is capable of being closely attached to the outer wall of the fixing base 112.

The locking member 116 may be made of an elastic material, such as rubber or polyurethane. The advantage of using an elastic material lies in its ability to undergo appropriate deformation during the installation of the locking member 116, which makes it easier to assemble the locking member 116 onto the connection sleeve 115, ensuring a tight fit. The elastic material also enhances the contact of the locking member 116 with both the fixing base 112 and the first nested tube 102, providing stronger friction during locking, thereby increasing the stability of the entire assembly.

In the embodiments, by defining the engagement groove 115a in the connection sleeve 115 and using the locking member 116 made of an elastic material, a reliable control of the locking member 116 during the locking and unlocking processes is realized, which prevents loosening or failure during use. The use of the elastic material not only simplifies the assembly process but also enhances the locking effect, which allows the support component 100 to be more stable and reliable at different height adjustments, thus being suitable for various photographic needs in various usage environments.

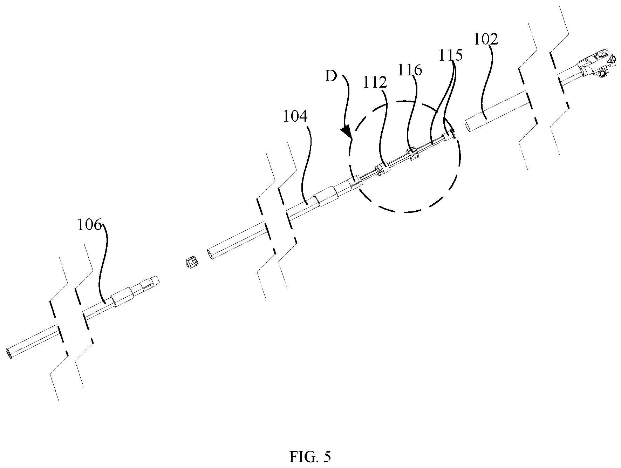

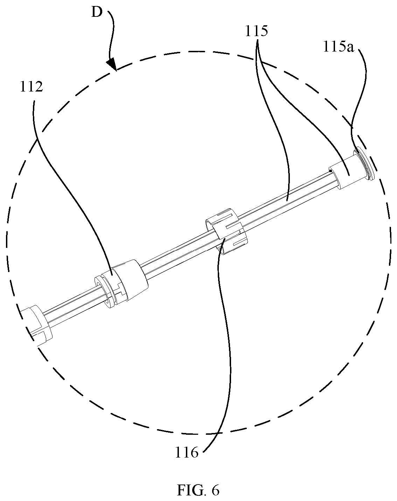

Referring to FIG. 5 and FIG. 6, FIG. 5 is an exploded structure diagram of a support leg assembly according to an embodiment of the present disclosure, and FIG. 6 is an enlarged view of portion D in FIG. 5.

In the embodiments, the outer wall of the fixing base 112 is provided with a taper.

Illustratively, the part of the fixing base 112 exposed outside the second nested tube 104 is designed to be tapered, and a tapered hole is defined inside the locking sleeve. By designing the fixing base 112 to be tapered, when a locking operation is performed, the tapered fixing base 112 can better guide the locking member 116 to smoothly enter the gap 112a between the fixing base 112 and the inner wall of the first nested tube 102. That is, during the locking process, the tapered fixing base 112 can serves as a guide to allow the locking member 116 to enter into the correct position along the conical surface, thereby reducing the resistance during installation and ensuring the accuracy of positioning. Moreover, the tapered hole of the locking sleeve is matched with the tapered structure of the fixing base 112 to ensure a tight fit between the two during locking, thereby enhancing locking efficiency and stability. Through the cooperation between the tapered fixing base 112 and the tapered hole, the locking member 116 can enter the gap 112a more smoothly, avoiding potential jamming or misalignment issues during the locking process.

With reference to FIG. 6, in the embodiments, the locking member 116 is defined with multiple openings 116b along its circumference.

In the embodiments, on the basis that the locking member 116 is made of an elastic material, the locking member 116 is defined with multiple openings 116b along its circumference. The openings 116b allow the locking member 116 to expand under the pressing action of the fixing base 112, to better contact the inner wall of the first nested tube 102 and thereby further increasing the friction. This design ensures that in the locked state, the locking member 116 can fully utilize its elastic properties. By making close contact with the inner wall of the first nested tube 102, the locking member 16 enhances the overall friction, thus making the support structure more stable.

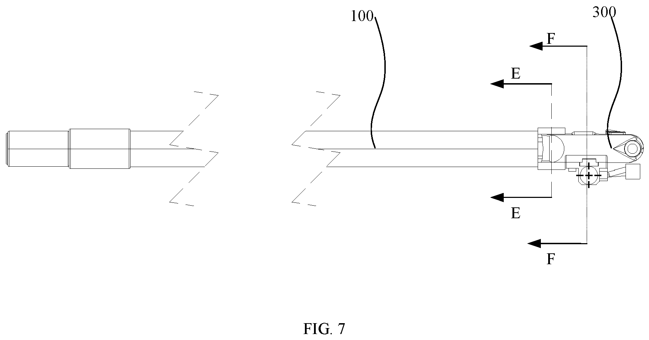

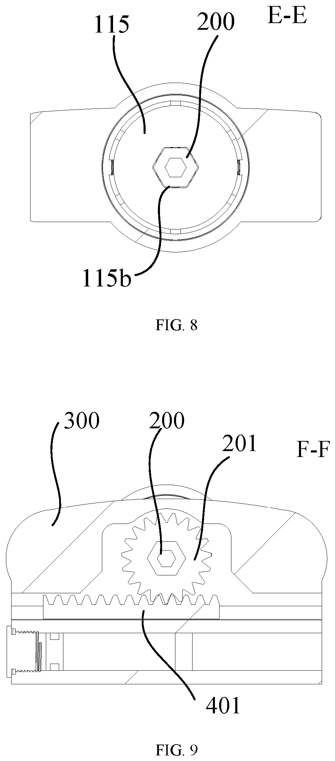

Referring to FIG. 7 and FIG. 8, in the embodiments, the middle of the connection sleeve 115 is defined with a through hole 115b, and the actuating rod 200 passes through the through hole 115b. The through hole 115b may be polygonal, and the shape and size of the actuating rod 200 are matched with the through hole 115b.

In the embodiments, the actuating rod 200 is polygonal, which may be triangular, quadrangular, or hexagonal. A polygonal through hole 115b fitted to the shape of the actuating rod 200 is defined through the middle of the connection sleeve 115, such that the actuating rod 200 can be firmly inserted into the connection sleeve 115 and effectively transmit rotational power.

By adopting a polygonal structure, the actuating rod 200 can efficiently transfer power when driving the connection sleeve 115 to rotate, preventing slippage and power loss. Moreover, the cooperation of the polygonal through-hole 115b with the polygonal actuating rod 200 also allows the connection sleeve 115 to move freely along the axial direction, which is important for deep locking between the first nested tube 102 and the second nested tube 104. By allowing axial movement while maintaining rotational power transmission, the support structure can be flexibly adjusted in height and operated in locking.

According to the embodiments, the actuating rod 200 is in a polygonal fit with the connection sleeve 115, ensuring reliable power transmission during rotation and reducing energy loss. Moreover, since such structure retains the possibility of axial movement, it is suitable for applications requiring frequent height adjustments, enhancing overall usability and structural stability.

Referring to FIG. 5, in the embodiments, the support component 100 includes multiple first nested tubes 102 and second nested tubes 104 that are sequentially sleeved. The support component 100 may further include a third nested tube which is at least partially inserted into the second nested tube 104 and is capable of moving relative to the second nested tube 104 in a case that an external force is applied, and a second locking assembly arranged at the end of the third nested tube inserted into the second nested tube 104. The second locking assembly is interlinked with the first locking assembly 110.

In the embodiments, the support component 100 is additionally provided with a nested tube, namely the third nested tube. The third nested tube is at least partially inserted into the second nested tube 104 and is capable of moving relative to the second nested tube 104 when an external force is applied. By providing the third nested tube, the height adjustment range of the support component 100 are further increased, allowing users to adjust the height more flexibly. In some other embodiments, in addition to the third nested tube, the support component 100 may further include other nested tubes, such as a fourth nested tube, a fifth nested tube, etc., to meet the needs for an even wider range of height adjustments.

The locking manner between the third nested tube and the second nested tube 104 in the embodiments is similar to that between the first nested tube 102 and the second nested tube 104 in the foregoing embodiments, both of which are implemented by a locking assembly. The third nested tube is locked by the second locking assembly. The second locking assembly is arranged at the end of the third nested tube inserted into the second nested tube 104, and is interlinked with the first locking assembly 110. This ensures the linkage between the nested tubes during locking or unlocking, making the height adjustment more convenient and efficient.

By adding the third nested tube and its linkage locking structure, a greater range of height adjustment can be provided. Furthermore, through the linkage between multiple locking assemblies, the entire support system becomes more stable and reliable during the adjustment process. This avoids potential loosening or miscoordination issues that might occur when adjusting each nested tube separately, thereby enhancing the user experience and safety of the support component 100.

Through the linkage design, the first locking assembly 110 and the second locking assembly can work together, which greatly simplifies the user's operation steps when adjusting and locking the support component 100. The user can lock or unlock multiple nested tubes at the same time with just one rotating action. The linkage design not only improves the convenience of operation, but also ensures the synchronization between different nested tubes, thereby further improving the overall stability and safety of the support system.

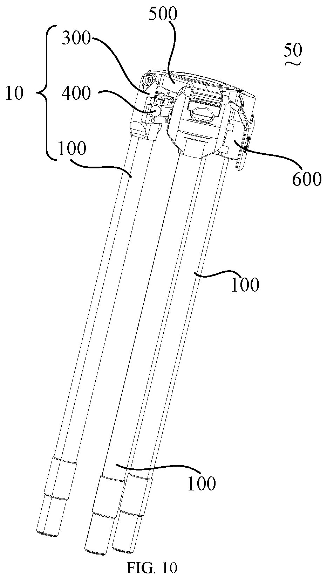

Referring to FIG. 9 and FIG. 10, in the embodiments, the support leg assembly 10 further includes a connection base 300 connected to the end of the first nested tube 102 away from the second nested tube 104, and a transmission component 400 arranged on the connection base 300 and connected to the actuating rod 200. The transmission component 400 is configured to transmit a driving force for rotating the actuating rod 200.

In the embodiments, the support leg assembly 10 further includes a connection base 300 arranged at the end of the first nested tube 102 away from the second nested tube 104. The connection base 300 not only serves a fixing function, but also is provided with the transmission component 400 to drive the actuating rod 200. The transmission component 400 is mounted on the connection base 300 and connected to the actuating rod 200. The transmission component 400 is configured to transmit the driving force to the actuating rod 200 to allow the actuating rod 200 to rotate.

The transmission component 400 may be designed in various ways; for example, it may use a hydraulic cylinder or a motor as a power source. These driving devices can provide sufficient power, which is transmitted through the transmission component 400 to the actuating rod 200, so as to drive the actuating rod 200 to rotate, thereby realizing the locking of the support leg assembly 10. The hydraulic cylinder can provide hydraulic drive with high stability, and the motor can precisely control the speed and direction of rotation, thereby meeting different application needs.

In the embodiments, by providing the transmission component 400 on the connection base 300, the adjustment process of the support leg assembly 10 becomes more efficient and convenient. The transmission component 400 can provide reliable power output, and thus there is no need for users to apply manual force during height adjustment, thereby enhancing the convenience and precision of the operation.

Referring to FIG. 9, in the embodiments, the transmission component 400 includes a rack 401, and the actuating rod 200 is provided with a gear 201 engaged with the rack 401.

In the embodiments, the transmission component 400 includes a rack 401, and the actuating rod 200 is provided with a gear 201 engaged with the rack 401. The cooperation of the rack 401 and the gear 201 is designed to convert rotary motion into linear motion, so as to realize precise adjustment of the height of the support leg assembly 10.

In operation, the gear 201 on the actuating rod 200 is engaged with the rack 401 of the transmission component 400. When the actuating rod 200 is rotated, the gear 201 drives the rack 401 to move linearly, so as to realize the height adjustment of the second nested tube 104 relative to the first nested tube 102. This design provides a larger transmission ratio, making the adjustment process more labor-saving, and also ensures the accuracy of the adjustment through the close engagement of the gear 201 and the rack 401.

The cooperation of the rack 401 and the gear 201 allows users to easily realize the height adjustment of the support leg assembly 10, and also maintains the stability and reliability of the system. Additionally, the structure has high transmission efficiency and good load-bearing capacity, thus is suitable for various photography support stand needs, whether in indoor or outdoor shooting environments.

The present disclosure further provides a photography support stand 50. Referring to FIG. 10, the photography support stand 50 includes a bearing base 500, at least one driving assembly 600, and multiple support leg assemblies 10 as described in the foregoing embodiments. The specific structure of the support leg assembly 10 may refer to the foregoing embodiments. Since the photography support stand 50 adopts all the technical solutions of the foregoing embodiments, it has at least all the technical effects brought by the technical solutions of the foregoing embodiments, which is not detailed herein. The bearing base 500 is connected with the connection bases 300 of the multiple support leg assemblies 10, and is configured for installing a photography device. The driving assembly 600 is installed on the bearing base 500 or the connection base 300 of the support leg assembly 10, and is configured to output power to the transmission component 400 of the support leg assembly 10.

The driving assembly 600 is a hydraulic pump or a motor.

In the embodiments, the bearing base 500 is connected with the connection bases 300 of the multiple support leg assemblies 10, and is configured for installing a photography device. The driving assembly 600 is installed on the bearing base 500 or the connection bases 300 of the multiple support leg assemblies 10, and is configured to output power to the transmission components 400 of the multiple support leg assemblies 10, so as to realize the height adjustment and locking of the support leg assemblies 10.

The driving assembly 600 may be a hydraulic pump or a motor. For example, in the scenario that a relatively large thrust force and high stability are required, a hydraulic pump may be selected as the driving assembly 600, such that precise adjustment and stable locking of the support leg assembly 10 can be realized by hydraulically driving the transmission component 400. For another example, in the scenario that precise control is required, a motor may be selected as the driving assembly 600, such that accurate control of the transmission component 400 can be realized through electric drive.

**In** the embodiments, by using the driving assembly 600, the height adjustment of the photography support stand 50 can be more convenient and efficient. The driving assembly 600 provides stable and controllable power output, avoiding the inconvenience of manual operation, and ensuring support stability at different heights.

The above-mentioned are only part or preferred embodiments of the present disclosure, and neither the words nor the drawings can limit the scope of protection of the present disclosure. Any equivalent structural transformation made by using the specification and drawings of the present disclosure under the concept of the present disclosure as a whole, or directly/indirectly applied in other related technical fields are included in the scope of protection of the present disclosure.

## Claims

1. A support leg assembly (10) for a photography support stand, **characterized in that**, the support leg assembly (10) comprises:
a support component (100), the support component (100) comprising at least a first nested tube (102) and a second nested tube (104) nested with the first nested tube (102), and the second nested tube (104) being capable of moving along an inner wall of the first nested tube (102) in a case that an external force is applied;
a first locking assembly (110), the first locking assembly (110) comprising a fixing base (112) installed at an end of the second nested tube (104) inserted into the first nested tube (102), a connection sleeve (115) rotatably connected with the fixing base (112), and a locking member (116) connected with the connection sleeve (115); a gap (112a) being defined between an outer wall of the fixing base (112) and an inner wall of the first nested tube (102), and the locking member (116) being partially inserted into the gap (112a); and
an actuating rod (200) inserted into the connection sleeve (115), the actuating rod (200) being configured to drive the connection sleeve (115) to rotate.

2. The support leg assembly (10) according to claim 1, wherein one end of the connection sleeve (115) is defined with an engagement groove (115a), and an end of the locking member (116) exposing outside the gap (112a) is connected in the engagement groove (115a).

3. The support leg assembly (10) according to claim 2, wherein the locking member (116) is sleeve-shaped, an outer wall of the locking member (116) is closely attached to the first nested tube (102), and an inner wall of the locking member (116) is capable of being closely attached to the outer wall of the fixing base (112).

4. The support leg assembly (10) according to claim 3, wherein the outer wall of the fixing base (112) is provided with a taper.

5. The support leg assembly according to claim 4, wherein the locking member (116) is defined with a plurality of openings (116b) along a circumference of the locking member (116).

6. The support leg assembly (10) according to claim 1, wherein a middle of the connection sleeve (115) is defined with a through hole (115b), the actuating rod (200) passes through the through hole (115b), the through hole (115b) is in a polygonal shape, and a shape and a size of the actuating rod (200) are fitted with the through hole (115b).

7. The support leg assembly (10) according to claim **1,** wherein a middle of the fixing base (112) is defined with a threaded hole (112b), and the fixing base (112) is threadedly connected with the connection sleeve (115).

8. The support leg assembly (10) according to any one of claims 1 to 7, wherein the support component (100) comprises multiple first nested tubes (102) and multiple second nested tubes (104) that are sequentially sleeved.

9. The support leg assembly (10) according to claim 8, wherein the support leg assembly further comprises:
a connection base (300) connected to an end of the first nested tube (102) away from the second nested tube (104); and
a transmission component (400) arranged on the connection base (300) and connected to the actuating rod (200), the transmission component (400) being configured to transmit a driving force to the actuating rod (200) to allow the actuating rod (200) to rotate.

10. The support leg assembly (10) according to claim 9, wherein the transmission component (400) comprises a rack (401), and the actuating rod (200) is provided with a gear (402) engaged with the rack (401).

11. A photography support stand, **characterized in that**, the photography support stand comprises:
a bearing base (500);
at least one driving assembly (600); and
multiple support leg assemblies (10) each as claimed in any one of claims 1 to 10; wherein,
the bearing base (500) is connected with the connection bases (300) of the multiple support leg assemblies (10), and is configured for installing a photography device;
the at least one driving assembly (600) is installed on the bearing base (500) or the connection bases (300) of the multiple support leg assemblies (10), and is configured to output power to the transmission components (400) of the multiple support leg assemblies (10); and
the at least one driving assembly (600) is a hydraulic pump or a motor.
